# EUROPEAN PATENT SPECIFICATION

(11) **EP 1 467 609 B1**
(45) Date of publication and mention of the grant of the patent: **25.05.2005**
(21) Application number: 02752923.9
(22) Date of filing: 19.08.2002
(51) Int. Cl.: A01D 34/62

(54) **MAGNETIC ATTACHMENT OF A BED KNIFE IN A REEL MOWER ASSEMBLY**
MAGNETISCHE BEFESTIGUNG DES GEGENMESSERS FÜR SPINDELMÄHER
FIXATION MAGNETIQUE D'UNE CONTRE-LAME DANS UNE TONDEUSE A LAMES ROTATIVES

(30) Priority: 07.06.2002 CA 2389770; 18.07.2002 CA 2394085; 24.07.2002 US 201841
(43) Date of publication of application: 20.10.2004
(73) Proprietor: Suncaddy Canada Inc., Regina, Saskatchewan S4N 0P8 (CA)
(72) Inventor: BUCHKO, Jeff, Regina, Saskatchewan S4Y 1A3 (CA)
(74) Representative: Inspicos A/S
(86) International application number: PCT/CA2002/001280
(87) International publication number: WO 2003/103374

(56) References cited:
- DE-A- 3 803 711
- US-A- 5 279 100
- US-A- 5 477 666
- US-A- 5 979 150

## Description

This invention generally relates to improved reel mower assemblies and feel mower units incorporating such assemblies. More specifically, it relates to an alternative attachment of the bed knife to the mower reel assembly which reduces maintenance costs.

### BACKGROUND

Reel mowers use a scissoring action to shear grass and like foliage, rather than tearing the leaves. Such reel mowers are more expensive and require more maintenance than rotary mowers, however they are preferred by golf courses and the like where appearance and healthy grass are important. Individual reel mower assemblies are quite narrow, and consequently reel mower units commonly comprise a plurality of side-by-side reel mower assemblies.

Examples of such mowers are disclosed in U.S. Patent Nos. 5,291,724, 5,477,666 and 6,318,059. In a typical reel mower assembly, an attachment member, commonly called a bed bar; is attached to the apparatus in rigid relationship to the reel, and a replaceable bed knife is attached to the bed bar.

The reel, bed bar and bed knife are oriented such that the bed knife is held parallel to the reel axis and in close proximity to the reel knives so that a shearing action is achieved between the reel knives and the bed knife. Typically an adjustment mechanism is provided to allow movement of the bed bar relative to the reel so that the bed knife can be moved into proper relationship with the rotating reel knives.

Conventionally, the bed knife is attached to the bed bar with a plurality of screws placed through holes in the bed knife and engaging threaded holes in the bed bar. Typically ten or more screws are used. Changing the bed knife requires that these screws be removed, and then replaced. Typically the bed knife is attached to the underside of the bed bar so that the apparatus must be raised sufficiently, or partially dis-assembled, to allow access to the underside of the reel mower assembly to remove the screws and the bed knife. A reel mower unit such as is used by a golf course or the like may comprise eight or ten individual reel mower assembly, and changing bed knives on such a mower unit requires significant labor time and corresponding downtime.

As well, the screws fix the bed knife to the bed bar such that when a stone or similar debris enters the mower, it can jam between the fixed bed knife and the reel, causing damage to one or more portions of the apparatus. Similarly should the bed knife contact a substantially buried obstruction, the bed knife can be damaged as it bounces over the obstruction. While the bed knife can simply be replaced, damage to the reel is generally much more costly and problematic, given the close tolerances required for proper operation.

### SUMMARY OF THE INVENTION

It is the object of the present invention to provide an improved reel mower assembly that overcomes the disadvantages of the prior art. The object is met by the combination of features of the main claim. The sub-claims disclose further advantageous embodiments of the invention.

It is the object of the present invention to provide an improved reel mower assembly that allows for quick changing of the bed knife with significantly reduced labor and downtime compared to the prior art. It is a further object of the invention to provide an improved bed knife attachment apparatus that can be attached to existing reel mower assemblies.

The present invention uses magnets to hold the bed knife against the mower frame in the operating position, and engagement means to prevent the bed knife from sliding with respect to the magnets.

In a first aspect the invention provides a reel mower assembly comprising a mower reel rotatably mounted to a frame, and a drive operative to rotate the reel about a reel axis. At least one magnet is mounted on the frame and a bed knife is magnetically held against the magnet in an operating position such that the bed knife is oriented in cutting relationship with the reel. Engagement means are operative to prevent sliding movement of the bed knife with respect to the magnet while allowing the bed knife to move away from the magnet when a separating force is exerted on the bed knife in a direction away from the magnet that is greater than an attractive force exerted on the bed knife by the magnet when the bed knife is in the operating position.

In a second aspect the invention provides an apparatus adapted for attachment to a reel mower assembly comprising a mower reel rotatably mounted to a frame and a drive operative to rotate the reel about a reel axis. The apparatus comprises a bed bar adapted for attachment to the frame substantially parallel to the reel axis and a plurality of magnets mounted on the bed bar. A bed knife is magnetically held against the magnets in an operating position such that the bed knife is oriented in cutting relationship with the reel when the bed bar is attached to the frame. Engagement means are operative to prevent sliding movement of the bed knife with respect to the magnets while allowing the bed knife to move away from the magnets when a separating force is exerted on the bed knife in a direction away from the magnets that is greater than an attractive force exerted on the bed knife by the magnets when the bed knife is in the operating position.

The engagement means can comprises protrusions extending from one of the frame and bed knife into corresponding recesses in the other of the frame and bed knife. Alternatively ridges could be formed on the frame such that the ridges bear against the front edge and side edges of the bed knife. Such ridges would prevent rearward or sideways movement, leaving the front cutting edge open and in cutting relationship to the reel. Little forward directed force will ordinarily be encountered by the bed knife in such a reel mower assembly, and such forward force could be resisted by the magnets. The protrusions and recesses have the advantage of resisting sliding forces forward, rearward or sideways. Both ridges and protrusions allow a separating force to be exerted on the bed knife to overcome the magnetic force holding the bed knife to the magnets in order to remove the bed knife.

In a third aspect the invention provides, in a real mower assembly comprising a mower reel rotatably mounted to a frame and a drive operative to rotate the reel about a reel axis, a method of holding a bed knife in an operating position such that the bed knife is oriented in cutting relationship with the reel. The method comprises mounting at least one magnet on the frame, magnetically holding the bed knife against the magnet in the operating position, and preventing sliding movement of the bed knife with respect to the magnet while allowing the bed knife to move away from the magnet when a separating force is exerted on the bed knife in a direction away from the magnet that is greater than an attractive force exerted on the bed knife by the magnet when the bed knife is in the operating position.

Commercial grade magnets are available of sufficient strength such that when they are built into the supporting frame for the bed knife, typically on a frame portion called the bed bar, they will hold the bed knife in the operating position resisting considerable separating forces that might be encountered by the bed knife in operation. The engagement means prevents sliding movement of the bed knife with respect to the bed bar in response to the rearward force of the reel pulling grass against the forward edge of the bed knife, or in response to sideways forces during turns. The engagement means aligns the bed knife in the proper operating position. When the bed knife and bed bar are clean, the bed knife can be readily maneuvered into engagement with the protrusions, ridges or the like and will then snap into place in response to the force of the magnets.

The magnetic attachment of the bed knife to the frame has numerous advantages over the mechanical or screw attachment of the prior art. The magnetic attachment results in a quick change assembly where the bed knife can basically be changed by prying it away from the magnets and attaching another bed knife to the magnets in its place without the need to disassemble the reel mower assembly from the remainder of the reel mower unit to access the screws holding the bed knife in place.

The present invention yields a relatively "tool-less" bed knife changing operation. The only tool required to remove a bed knife from the frame would be a blade or the like to pry the items apart. The strength of the magnets and number of magnets used in the frame to hold the bed knife in place could be adjusted or varied depending on the circumstances.

The magnetic attachment also reduces maintenance costs by allowing the bed knife to be pulled away from its magnetic attachment and released from the bed bar when an obstruction such as a rock or the like is encountered. Damage to the reel and bed knife is thereby reduced.

While permanent magnets will likely be most widely suited, electromagnets could also be used to hold the bed knife in place. Where electromagnets are used, it would be even easier to release the blade from the frame, since by deactivation of the electromagnets the blades could easily be removed therefrom.

In addition to manufacturing a completed new reel apparatus in accordance with the preset invention, a retrofit bed bar and bed knife could also be designed in accordance with the present invention to be retrofitted onto varicus existing reel mower units.

The summary of the invention does not necessuily disclose all the features essential for defining the invention; the invention may lie in a sub-combination of the disclosed features.

### DESCRIPTION OF THE DRAWINGS:

While the invention is claimed in the concluding portions hereof, preferred embodiments are provided in the accompanying detailed description which may be best understood in conjunction with the accompanying diagrams where like parts in each of the several diagrams are labeled with like numbers, and where:
Fig. 1 is an exploded perspective view showing a reel mower assembly and typical bedknife mounting assembly of the prior art;
Fig. 2 is a schematic side view showing the reel and bedknife mounting arrangement of the prior art reel mower assembly of Fig. 1;
Fig. 3 is a perspective view of the top of a magnetic bed bar of one embodiment of the present invention;
Fig. 4 is a is a perspective view of the bottom of the bed bar of Fig. 3;
Fig. 5 is a perspective view of a bad knife for attachment to the magnetic bed bar of Fig. 3;
Fig. 6 is a schematic side view of the bed knife of Fig. 5 in the operating position on the magnetic bed bar of Fig. 3.
Fig. 7 is a schematic side view of an alternate bed knife and magnetic bed bar;
Fig. 8 is a side view of the bed bar of Fig. 7 contacting an obstruction and indicating the forces exerted on the bed knife to release it from the bed bar.

### DETAILED DESCRIPTION OF THE ILLUSTRATED EMBODIMENTS:

The following description is by way of example only and without limitation to the combination of features necessary for carrying the invention into effect.

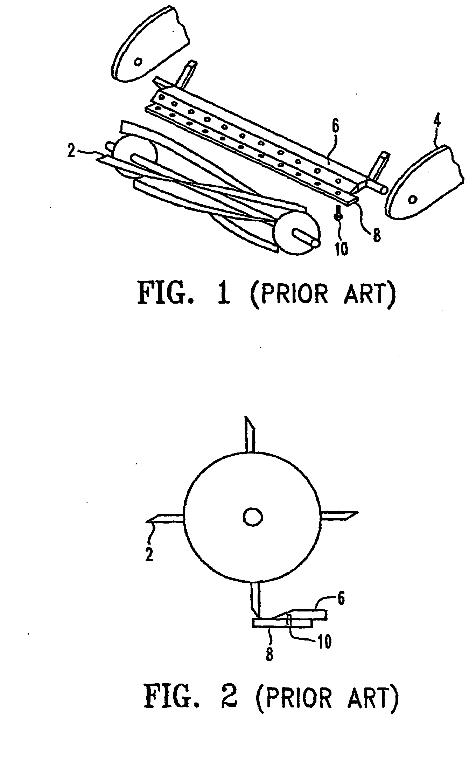

Fig. 1 schematically illustrates the major parts of a prior art reel mower assembly comprising a mower reel 2 rotatably mounted to a frame 4. A drive, not shown, is operative to rotate the reel 2 about a reel axis RA. A bed bar 6 forms a portion of the frame 4, and the bed knife 8 is attached to the bed bar 6 by screws 10. Typically some adjustment mechanism, not shown, is provided to vary the position of the bed bar 6 with respect to the reel 2 so that the proper cutting relationship between the bed knife 8 and reel 2 may be achieved. Fig. 2 illustrates schematically the orientation of the reel 2, the bed bar 6, and the bed knife 8 of the prior art.

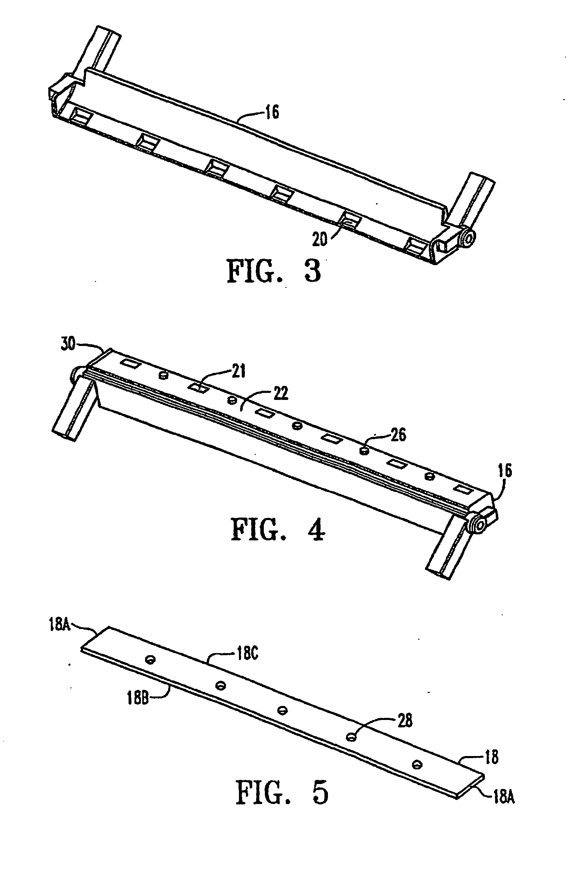

Figs. 3 and 4 illustrate an embodiment of a magnetic bed bar 16 of the invention. The illustrated bed bar 16 is configured to attach to the frame 4 of the prior art reel mower assembly of Fig. 1 in the same manner as the prior art bed bar 6, so that the magnetic bed bar 16 can be retro-fit to existing reel mower assemblies. The bed bar frame portion configuration is fairly widespread in various brands of existing reel mower assemblies, allowing for relatively simple modification of the magnetic bed bar such that same may be substituted for the existing bed bars.

As illustrated in Figs. 3 and 4, a plurality of magnets 20 are mounted in a spaced apart relationship on the bed bar 16, and in the illustrated embodiment the magnets 20 are embedded in the bed bar 16 such that a lower face 21 thereof is substantially flush with the bottom surface 22 of the magnetic bed bar 16.

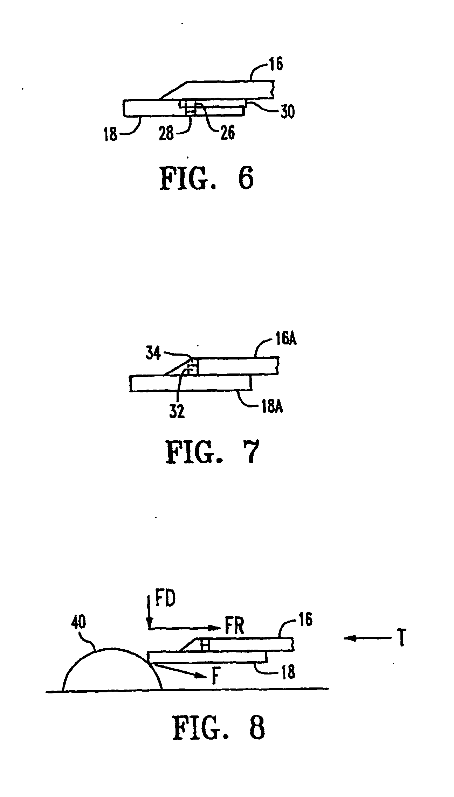

The bed knife 18, illustrated in Fig. 5, is magnetically held against the magnets 20 in an operating position as illustrated in Fig. 6 such that the bed knife 18 is oriented in cutting relationship with the reel 2 in the same fashion as the bed knife 8 of the prior art illustrated in Fig. 2.

Engagement means are operative to prevent sliding movement of the bed knife 18 with respect to the magnets 20. In the illustrated embodiment the engagement means comprises a plurality of protrusions, illustrated as pegs 26, extending from the bed bar 16 into a corresponding recess, illustrated as a hole 28, in the bed knife 18. Conversely as illustrated in Fig. 7, the pegs 32 could extend up from the bed knife 18A into corresponding holes 34 in the bed knife 16A. Further engagement means are illustrated in Fig. 6 as a ridge 30 bearing against opposite end edges 18A and rear edge 18B of the bed knife 18.

While preventing sliding movement, the engagement means, illustrated as pegs 26 in holes 28, and as ridge 30, but also including other means, also allows the bed knife 18 to move away from the magnets 20 when a separating force is exerted on the bed knife 18 in a direction away from the magnets 20 that is greater than an attractive force exerted on the bed knife 18 by the magnets 20 when the bed knife 18 is in the operating position. While allowing the bed knife 18 to be easily removed by prying it away from the bed bar 16, this configuration also allows the bed knife to release from the bed bar 16 when an obstruction is encountered.

Fig. 8 illustrates schematically contact of the bed knife 18 moving in direction T with a typical obstruction ill as a partially buried stone 40. The contact causes a force F to be exerted on the bed knife 18. The major component of this force F is exerted rearward, as illustrated by the arrow FR, however there is also a smaller component FD exerted downward such that the bed knife 18 is pushed away from the bed bar 16 and the magnets 20. When this component of force FD exceeds the magnetic attractive force of the magnets 20 the bed knife 18 will release from the bed bar 16. In the prior art bed knife attached by screws, more damage would occur, since the bed knife would have to ride over the obstruction. Similarly where a stone or the like comes between the reel and the bed knife, a like force is exerted which can release the bed knife, reducing the possibility of severe damage to the reel which can be costly to repair.

The ridge 30 alone could provide satisfactory operation with a new bed knife 18, as same essentially forms a low pocket that closely fits the edges 18A, 18B of the bed knife 18. Sideways and rearward sliding movement with respect to the magnets 20 is thus prevented. It is however possible to make the bed knife 18 double edged such that the front and rear edges 18C, 18B are both cutting edges. The holes 28 and pegs 26 are oriented such that the bed knife 18 can be rotated bringing the rear cutting edge 18B to the front, thereby doubling the life of the bed knife 18. With such a double edged bed knife 18, the front edge becomes worn and rounded duting use such that the ridge bears against a rounded edge that may slide over the ridge when rearward forces are applied. The pegs and holes are not affected by wear on the bed knife edges and will maintain the bed knife in position when it is rotated. The use of the ridge 30 in combination with the pegs 26 and holes 28 helps to align the bed knife with the pegs during installation.

The present invention could be practiced in a number of fashions including by manufacturing new reel cutting assemblies in accordance with the present invention, or alternatively, by producing a retrofit bed bar or support frame kit which would allow the magnetic blade attachment of the present invention to be implemented on an existing mower.

The foregoing is considered as illustrative only of the principles of the invention. Further, since numerous changes and modifications will readily occur to those skilled in the art, it is not desired to limit the invention to the exact construction and operation shown and described, and accordingly, all such suitable changes or modifications in structure or operation which may be resorted to are intended to fall within the scope of the claimed invention.

## Claims

1. A reel mower assembly comprising:
a mower reel (2) rotatably mounted to a frame (4), and a drive operative to rotate the reel about a reel axis (RA);
**characterised by** :
at least one magnet (20) mounted on the frame;
a bed knife (18) magnetically held against the magnet (20) in an operating position such that the bed knife is oriented in cutting relationship with the reel (2); and
engagement means (26;28;30) operative to prevent sliding movement of the bed knife (18) with respect to the magnet (20) while allowing the bed knife to move away from the magnet when a separating force is exerted on the bed knife in a direction away from the magnet that is greater than an attractive force exerted on the bed knife by the magnet when the bed knife is in the operating position.

2. The assembly of Claim 1 wherein the engagement means (26;28;30) comprises at least one protrusion (26) extending from the frame or bed knife into a corresponding recess (28) in the other of the frame or bed knife (18).

3. The assembly of any one of Claims 1 and 2 wherein the engagement means (26;28;30) comprises at least one ridge (30) attached to the frame and bearing against an edge (18B;18C) of the bed knife (18).

4. The assembly of any one of Claims 1-3 wherein the frame (4) further comprises a bed bar (16) oriented substantially parallel to the reel axis (RA), and wherein at least one magnet (20) is attached to the bed bar (16).

5. The assembly of Claim 4 wherein the engagement means (26;28;30) is formed by the bed bar (16) and bed knife (18).

6. An apparatus adapted for attachment to a reel mower assembly comprising a mower reel (2) rotatably mounted to a frame (4) and a drive operative to rotate the reel about a reel aixs, (RA) **characterised in that** the the apparatus comprises:
a bed bar (16) adapted for attachment to the frame (4) substantially parallel to the reel axis (RA),
a plurality of magnets (20) mounted on the bed bar (16);
a bed knife (18) magnetically held against the magnets (20) in an operating position such that the bed knife is oriented in cutting relationship with the reel (2) when the bed bar (16) is attached to the frame; and
engagement means (26;28;30) operative to prevent sliding movement of the hed knife (18) with respect to the magnets (20) while allowing the bed knife to move sway from the magnets when a separating force is exerted on the bed knife in a direction away from the magnets that is greater than an attractive force exerted on the bed knife by the magnets when the bed knife is in the operating position.

7. The apparatus of Claim 6 wherein the engagement means (26;28;30) comprises at least one protrusion (26) extending from the bed bar (16) or bed knife (18) into a corresponding recess (28) in the other of the bed bar or bed knife (18).

8. The apparatus of any one of Claims 6 and 7 wherein the engagement means (26;28;30) comprises at least one ridge (30) attached to the bed bar (16) and bearing against an edge of the bed knife (18).

9. A method of holding a bed knife (18) of a reel mower assembly in an operating position, the reel mower assembly comprising a mower reel (2) rotatably mounted to a frame (4) and a drive operative to rotate the reel about a reel axis (RA), the operating position being such that the bed knife (18) is oriented in cutting relationship with the reel (2), **characterised in that** comprises:
mounting at least one magnet (20) on the frame (4);
magnetically holding the bed knife (18) against the magnet (20) in the operating position; and
preventing sliding movement of tho bed knife (18) with respect to the magnet (20) while allowing the bed knife to move away from the magnet when a separating force is exerted on the bed knife in a direction away from the magnet that is greater than an attractive force exerted on the bed knife by the magnet when the bed knife is in the operating position.

10. The method of Claim 9 wherein sliding movement is prevented by providing at least one protrusion (26) extending from the frame (4) or bed knife (18) into a corresponding recess (28) in the other of the frame or bed knife.

11. The method of any one of Claims 9 and 10 wherein sliding movement is prevented by providing at least one ridge (30) attached to the frame and bearing against an edge (18B;18C) of the bed knife (18).

## Patentansprüche

1. Baugruppe für einen Spindelmäher, welche folgendes aufweist:
eine drehbar an einem Rahmen (4) angebrachte Mäherspindel (32) sowie einen Antrieb, der zum wirksamen Drehantrieb der Spindel um eine Spindelachse (RA) vorgesehen ist, **gekennzeichnet durch**:
mindestens einen am Rahmen angebrachten Magneten (20);
eine Einbauklinge bzw. ein Schnitzelmesser (18), die in einer Betriebsstellung magnetisch gegen den Magneten (20) so gehalten wird, dass die Einbauklinge in einer Schneidbeziehung zur Spindel (2) ausgerichtet ist, und
eine Eingriffseinrichtung (26; 28; 30), welche in der Weise wirksam ist, dass sie eine Verschiebebewegung der Einbauklinge (18) bezüglich des Magneten (20) verhindert und
dabei eine Bewegung der Einbauklinge vom Magneten weg zulässt, wenn auf die Einbauklinge eine Trennkraft in einer Richtung vom Magneten weg ausgeübt wird, die größer ist als eine vom Magneten auf die Einbauklinge ausgeübte Anziehungskraft, wenn sich die Einbauklinge in ihrer Betriebsstellung befindet.

2. Baugruppe nach Anspruch 1, bei welcher die Eingriffseinrichtung (26; 28; 30) mindestens einen Vorsprung (26) aufweist, der sich von dem Rahmen oder von der Einbauklinge aus in eine entsprechende Vertiefung (28) in dem jeweils anderen Element, nämlich der Einbauklinge (18) oder dem Rahmen, hinein erstreckt

3. Baugruppe nach einem der Ansprüche 1 und 2, wobei die Eingriffseinrichtung (26; 28; 30) mindestens eine Rippe (30) aufweist, die an dem Rahmen angebracht ist und gegen eine Kante (18B; 18C) der Einbauklinge (18) anliegt bzw. drückt

4. Baugruppe nach einem der Ansprüche 1 bis 3, bei welcher der Rahmen (4) des Weiteren eine Einbauleiste (16) aufweist, die im Wesentlichen parallel zur Spindelachse (RA) verläuft, und bei welcher mindestens ein Magnet (20) an der Einbauleiste (16) angebracht ist

5. Baugruppe nach Anspruch 4, bei welcher die Eingriffseinrichtung (26; 28; 30) aus der Einbauleiste (16) und der Einbauklinge (18) gebildet ist

6. Vorrichtung zur Anbringung an einer Baugruppe für einen Spindelmäher, welche eine Mäherspindel (2) aufweist, die drehbar an einem Rahmen (4) angebracht ist, sowie einen Antrieb, der zum wirksamen Drehantrieb der Spindel um eine Spindelachse (RA) vorgesehen ist,
**dadurch gekennzeichnet, dass** die Vorrichtung folgendes ausweist:
eine Einbauleiste (16), die zur Anbringung an dem Rahmen (4) im Wesentlichen parallel zur Spindelachse (RA) ausgelegt ist;
eine Vielzahl von Magneten (20), die auf der Einbauleiste (16) angebracht ist;
eine Einbauklinge bzw. ein Schnitzelmesset (18), die magnetisch gegen die Magneten (20) in einer Betriebsstellung in der Weise gehalten ist, dass die Einbauklinge in Schneidbeziehung zur Spindel (2) ausgerichtet ist, wenn die Einbauleiste (16) an dem Rahmen angebracht ist; und
eine Eingriffseinrichtung (26; 28; 30), welche in der Weise wirksam ist, dass sie eine Verschiebebewegung der Einbauklinge (18) bezüglich der Magnete (20) verhindert und dabei eine Bewegung der Einbauklinge von den Magneten weg zulässt, wenn auf die Einbauklinge eine Trennkraft in einer Richtung von den Magneten weg ausgeübt wird, die größer ist als die von den Magneten auf die Einbauklinge ausgeübte Anziehungskraft, wenn sich die Einbauklinge in ihrer Betriebsstellung befindet

7. Vorrichtung nach Anspruch 6, bei welcher die Eingriffseinrichtung (26; 28; 30) mindestens einen Vorsprung (26) aufweist, der sich von der Einbauleiste (16) oder von der Einbauklinge (18) aus in eine entsprechende Vertiefung (28) in dem jeweils anderen Element, nämlich der Einbauklinge (18) oder der Einbauleiste, hinein erstreckt.

8. Vorrichtung nach einem der Ansprüche 6 und 7, bei welcher die Eingriffseinrichtung (26; 28; 30) mindestens eine Rippe (30) aufweist, die an der Einbauleiste (16) angebracht ist und gegen eine Kante der Einbauklinge (18) anliegt bzw. drückt.

9. Verfahren zum Halten einer Einbauklinge bzw. eines Schnitzelmessers (18) einer Baugruppe für einen Spindelmäher in einer Betriebsstellung, wobei die Baugruppe für den Spindelmäher eine drehbar an einem Rahmen (4) angebrachte Mäherspindel (2) sowie einen Antrieb, der zum wirksamen Drehantrieb der Spindel um eine Spindelachse (RA) vorgesehen ist, aufweist, wobei die Betriebsstellung so gestaltet ist, dass die Einbauklinge (18) in einer Schneidbeziehung zur Spindel (2) ausgerichtet ist,
**dadurch gekennzeichnet,**
**dass** das Verfahren die folgenden Schritte umfasst:
Anbringen von mindestens einem Magneten (20) an dem Rahmen (4);
magnetisches Halten der Einbauklinge (18) gegen den Magneten (20) in der Betriebsstellung; und
Verhindern einer Verschiebebewegung der Einbauklinge (18) bezüglich des Magneten (20) und dabei Zulassen einer Bewegung der Einbauklinge von dem Magneten weg, wenn auf die Einbauklinge eine Trennkraft in einer Richtung vom Magneten weg ausgeübt wird, die größer ist als die vom Magneten auf die Einbauklinge ausgeübte Anziehungskraft, wenn sich die Einbauklinge ihrer Betriebsstellung befindet

10. Verfahren nach Anspruch 9, bei welchem eine Verschiebebewegung dadurch verhindert wird, dass mindestens ein Vorsprung (26) vorgesehen ist, der sich von dem Rahmen (4) oder der Einbauklinge (18) aus in eine entsprechende Vertiefung (28) in dem anderen Element, nämlich der Einbauklinge oder dem Rahmen, hinein erstreckt

11. Verfahren nach einem der Ansprüche 9 und 10, bei welchem eine Verschiebebewegung dadurch verhindert wird, dass mindestens eine Rippe (30) vorgesehen ist, die an dem Rahmen angebracht ist und gegen eine Kante (18B; 18C) der Einbauklinge (18) anliegt bzw. drückt.

## Revendications

1. Ensemble de tondeuse à tambour rotatif à lames comprenant :
un tambour rotatif à lames (2) de tondeuse monté de manière à pouvoir tourner sur un châssis (4) et une unité d'entraînement pouvant agir de manière à faire tourner le tambour rotatif à lames autour d'un axe (RA) du tambour,
**caractérisé par** :
au moins un aimant (20) monté sur le châssis;
une contre-lame (18) retenue magnétiquement contre l'aimant (20) dans une position de fonctionnement de telle sorte que la contre-lame est orientée selon une relation de coupe par rapport au tambour rotatif à lames (2) et
des moyens d'engagement (26;28;30) pouvant agir de manière à empêcher un mouvement de glissement de la contre-lame (18) par rapport à l'aimant (20) tout en permettant à la contre-lame de s'écarter de l'aimant lorsqu'est appliquée à la contre-lame, dans une direction s'écartant de l'aimant, une force de séparation qui est supérieure à une force d'attraction appliquée à la contre-lame par l'aimant lorsque la contre-lame est dans une position de fonctionnement.

2. Ensemble selon la revendication 1, dans lequel les moyens d'engagement (26;28;30) comprennent au moins une partie saillante (26) qui s'étend depuis le châssis ou la contre-lame dans un renfoncement correspondant (28) dans l'autre du châssis ou de la contre-lame (18).

3. Ensemble selon l'une quelconque des revendications 1 et 2, dans lequel les moyens d'engagement (26;28; 30) comprennent au moins une nervure (30) fixée au châssis et s'appliquant contre un bord (18B;18C) de la contre-lame (18).

4. Ensemble selon l'une quelconque des revendications 1 à 3, dans lequel le châssis (4) comporte en outre une barre fixe (16), orientée de manière à être essentiellement parallèle à l'axe (RA) du tambour et dans lequel au moins un aimant (20) est fixé à la barre fixe (16).

5. Ensemble selon la revendication 4, dans lequel les moyens d'engagement (26;28;30) sont formés par la barre fixe (16) et par la contre-lame (18).

6. Dispositif adapté pour sa fixation à un ensemble de tondeuse à tambour rotatif à lames comprenant un tambour rotatif à lames (2) de tondeuse montée de manière à pouvoir tourner sur un châssis (4) et une unité d'entraînement pouvant agir de manière à faire tourner le tambour autour d'un axe (RA) du tambour, **caractérisé en ce que** le dispositif comprend :
une barre fixe (16) adaptée pour être fixée au châssis (4) de manière à être essentiellement parallèle à l'axe (RA) du tambour;
une pluralité d'aimants (20) montés sur la barre fixe (16);
une contre-lame (18) retenue magnétiquement contre l'aimant (20) dans une position de fonctionnement telle que la contre-lame est orientée selon une relation de coupe par rapport au tambour (2) lorsque la barre fixe (16) est fixée au châssis; et
des moyens d'engagement (26;28;30) pouvant agir de manière à empêcher un mouvement de glissement de la lame (18) du tambour par rapport aux aimants (20) tout en permettant à la contre-lame de s'écarter des aimants lorsqu'est appliquée à la contre-lame dans une direction s'écartant des aimants, une force de séparation qui est supérieure à une force d'attraction appliquée à la contre-lame par les aimants lorsque la contre-lame est dans la position opérationnelle.

7. Dispositif selon la revendication 6, dans lequel les moyens d'engagement (26;28;30) comprennent au moins une partie saillante (26) qui s'étend depuis la barre fixe (16) ou la contre-lame (18) dans un renfoncement correspondant (28) de l'autre de la barre fixe ou de la contre-lame (18).

8. Dispositif selon l'une des revendications 6 et 7, dans lequel les moyens d'engagement (26;28;30) comprennent au moins une nervure (30) fixée à la barre fixe (16) et s'appliquant contre un bord de la contre-lame (18).

9. Procédé pour retenir une contre-lame (18) d'un ensemble de tondeuse à tambour à lames rotatives dans une position de fonctionnement, l'ensemble de tondeuse à tambour à lames rotatives comprenant un tambour à lames rotatives (2) monté de manière à pouvoir tourner sur un châssis (4) et une unité d'entraînement pouvant agir de manière à faire tourner le tambour autour d'un axe (RA) du tambour, la position de fonctionnement étant telle que la contre-lame (18) est orientée dans une relation de coupe par rapport au tambour à lames rotatives (2), **caractérisé en ce que** le procédé consiste à :
monter au moins un aimant (20) sur le châssis (4); retenir magnétiquement la contre-lame (18) contre l'aimant (20) dans la position de fonctionnement; et
empêcher un mouvement de glissement de la contre-lame (18) par rapport à l'aimant (20) tout en permettant à la contre-lame de s'écarter de l'aimant lorsqu'est appliquée à la contre-lame dans une direction l'écartant de l'aimant, une force de séparation qui est supérieure à une force d'attraction appliquée à la contre-lame par l'aimant lorsque la contre-lame est dans la position de fonctionnement.

10. Procédé selon la revendication 9, selon lequel le mouvement de glissement est empêché par le fait qu'il est prévu une partie saillante (26) s'étendant du châssis (4) ou de la contre-lame (18), dans un renfoncement correspondant (28) dans l'autre du châssis ou de la contre-lame.

11. Procédé selon l'une quelconque des revendications 9 et 10, selon lequel un mouvement de glissement est empêché par le fait qu'il est prévu au moins une nervure (30) fixée au châssis et en appui contre un bord (18B;18C) de la contre-lame (18).
